# EUROPEAN PATENT APPLICATION

(11) **EP 3 435 292 A1**
(43) Date of publication of application: **30.01.2019**
(21) Application number: 17789261.9
(22) Date of filing: 11.04.2017
(51) Int. Cl.: G06N 3/00

(54) **FEELING SPECIFICATION SYSTEM, SYSTEM, AND PROGRAM**

(30) Priority: 28.04.2016 JP 2016091998
(71) Applicant: Cocoro SB Corp., Tokyo 105-7309 (JP)
(72) Inventor: SON Masayoshi, Tokyo 105-7309 (JP); TSUTSUI Takashi, Tokyo 105-7309 (JP); TOMONAGA Kosuke, Tokyo 105-7309 (JP); OURA Kiyoshi, Tokyo 105-7309 (JP)
(74) Representative: Michalski Hüttermann & Partner Patentanwälte mbB
(86) International application number: PCT/JP2017/014876
(87) International publication number: WO 2017/187974

(57) **Abstract**

An emotion identifying system includes: an information acquiring unit that acquires information for deciding an emotion of a target object; a judging unit that, based on the information, judges whether or not judgement factors associated respectively with a plurality of emotions are each met; an adjusting unit that, if the information matches a predetermined condition about a predetermined type of emotion among the plurality of emotions, expands a range occupied by the predetermined type of emotion in a space in which the plurality of emotions is mapped; an emotion identifying unit that identifies, among the plurality of emotions, an emotion for which the judging unit judges that the associated judgement factor is met; and an output control unit that causes information indicating an emotion identified by the emotion identifying unit and ranges occupied respectively by the plurality of emotions in the space to be output.

## Description

### BACKGROUND

### 1. TECHNICAL FIELD

The present invention relates to an emotion identifying system, a system and a program.

### 2. RELATED ART

A terminal that studies conversations between a user and another person that the user is talking to on the phone and accumulates, in a reply table, replies from the other person on the phone to questions from the user has been known (please see Patent Literature 1, for example). In addition, an emotion generating apparatus including a neural network that receives an input of user information, equipment information and a current emotional state of itself to output the next emotional state has been known (please see Patent Literature 2, for example). In addition, a technique to store spatiotemporal patterns in an associative memory including a plurality of electronic neurons having a layer neural network relation having directional artificial synapse connectivity has been known (please see Patent Literature 3, for example).
[Prior Art Literatures] [Patent Literatures] [Patent Literature 1] Japanese Patent Application Publication No. 2011-253389
[Patent Literature 2] Japanese Patent Application Publication No. H10-254592
[Patent Literature 3] Japanese Translation of PCT International Patent Application No. 2013-535067

Conventionally, there has been a drawback in a process of identifying an emotion of a target object that the state where it becomes easier for a particular type of emotion to emerge depending on particular situations cannot be handled appropriately.

### [General Disclosure]

A first aspect of the present invention provides an emotion identifying system. The emotion identifying system may include an information acquiring unit that acquires information for deciding an emotion of a target object. The emotion identifying system may include a judging unit that, based on the information, judges whether or not judgement factors associated respectively with a plurality of emotions are each met. The emotion identifying system may include an adjusting unit that, if the information matches a predetermined condition about a predetermined type of emotions, expands a range occupied by the predetermined type of emotions in a space in which the plurality of emotions is mapped. The emotion identifying system may include an emotion identifying unit that identifies, among the plurality of emotions, an emotion for which the judging unit judges that the associated judgement factor is met. The emotion identifying system may include an output control unit that causes information indicating an emotion identified by the emotion identifying unit and ranges occupied respectively by the plurality of emotions in the space to be output.

Based on the information acquired by the information acquiring unit, the adjusting unit may further adjust an operation parameter that influences a judgement about one or more judgement factors which are associated with an emotion having a range which is to be expanded in the space such that it becomes easier for the one or more judgement factors to be met.

A plurality of the judgement factors may be a plurality of artificial neurons included in a neural network to which input information based on the information acquired by the information acquiring unit is input.

The plurality of artificial neurons may be associated with any emotions among the plurality of emotions, and the emotion identifying unit may identify, among the plurality of emotions, an emotion associated with a firing artificial neuron among the plurality of artificial neurons.

The operation parameter may be a coupling coefficient of an artificial synapse included in the neural network.

The adjusting unit may increase a coupling coefficient of a strong coupling artificial synapse connected to the one or more judgement factors associated with the emotion having the range which is to be expanded in the space.

The emotion identifying system may include a secretion information generating unit that generates secretion information indicating a secretion amount of one or more endocrine substances based on the information acquired by the information acquiring unit. The adjusting unit may adjust the coupling coefficient based on the secretion amount of the one or more endocrine substances indicated by the secretion information; and further adjust a coupling coefficient connected to the one or more judgement factors associated with the predetermined type of emotions if a range occupied by the predetermined type of emotions is expanded in the space.

The predetermined type of emotions may be emotions corresponding to a paranoid-schizoid position. The predetermined condition may be a condition for determining that the target object is in a predetermined situation corresponding to the paranoid-schizoid position.

The output control unit may highlight-display the range in the space occupied by an emotion identified by the emotion identifying unit in the space.

The emotion identifying system may further include a control unit that controls the target object according to an emotion identified by the emotion identifying unit.

A second aspect of the present invention provides a system. The system may include the above-mentioned emotion identifying system. The system may include the target object.

A third aspect of the present invention provides a program that causes a computer to function as the above-mentioned emotion identifying system.

The general disclosure clause does not necessarily describe all necessary features of the embodiments of the present invention. The present invention may also be a sub-combination of the features described above.

### BRIEF DESCRIPTION OF THE DRAWINGS

FIG. 1 schematically shows one example of the overall configuration of a system 10 according to the present invention.
FIG. 2 schematically shows the functional block configurations of a robot 40 and a server 60.
FIG. 3 schematically shows an emotion map 300 on which a plurality of emotions are mapped.
FIG. 4 schematically shows a part of a neural network used by the system 10.
FIG. 5 is one example of correspondence information in which storage battery remaining capacities and endocrine substances are associated with each other.
FIG. 6 is one example of coupling coefficient correspondence information in which noradrenalin secretion amounts and coupling coefficients BS are associated with each other.
FIG. 7 shows one example of information about correspondence between coupling coefficients and conditions under which ranges of emotions corresponding to paranoid-schizoid position are expanded.
FIG. 8 is a flowchart showing operation of each unit in the emotion identifying system 100.
FIG. 9 shows an emotion map screen displayed on the robot 40.
FIG. 10 shows an emotion map screen displayed on the robot 40.

### DESCRIPTION OF EXEMPLARY EMBODIMENTS

Hereinafter, (some) embodiment(s) of the present invention will be described. The embodiment(s) do(es) not limit the invention according to the claims, and all the combinations of the features described in the embodiment(s) are not necessarily essential to means provided by aspects of the invention.

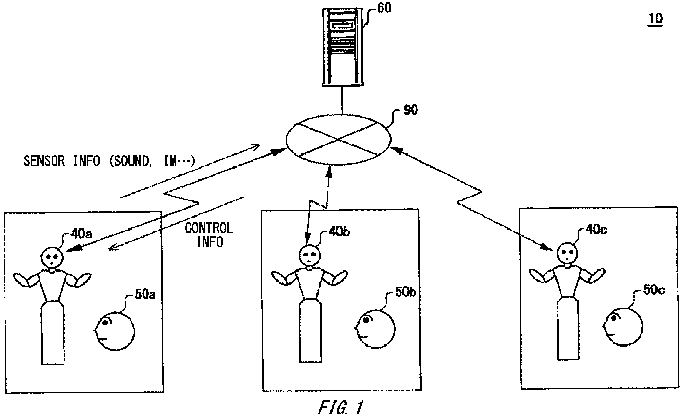

FIG. 1 schematically shows one example of the overall configuration of a system 10 according to the present invention. The system 10 includes a server 60, a robot 40a, a robot 40b and a robot 40c. The server 60 may function as an emotion identifying system. Each of the robot 40a, robot 40b and robot 40c is one example of target objects in the emotion identifying system.

The robot 40a, robot 40b and robot 40c are arranged at home, for example. A user 50a is a user of the robot 40a. The user 50a is a family member of the home at which the robot 40a is arranged or the user 50a is another person visiting the home. The robot 40a interacts with the user 50a through a conversation or the like. Likewise, each of the robot 40b and robot 40c interacts with a corresponding one of a user 50b and a user 50c through a conversation or the like. The robot 40a, robot 40b and robot 40c can be applied to usage forms in which they are arranged at a reception desk of a shop or office or the like, and serves visiting customers, for example. Usage forms of the robot 40a, robot 40b and robot 40c are not limited to these usage forms.

The server 60 is provided remotely from the robot 40a, robot 40b and robot 40c. The server 60 can control the robot 40a, robot 40b and robot 40c through a communication network 90. For example, the server 60 acquires, through the communication network 90, sensor information detected at the robot 40a, decides an emotion of the robot 40a or operation that the robot 40a is caused to perform based on the acquired sensor information, and issues an instruction to the robot 40a by transmitting control information through the communication network 90.

The robot 40b and robot 40c have approximately the same functions as those of the robot 40a. In an explanation of the system 10, the robot 40a, robot 40b and robot 40c are collectively referred to as a robot 40 in some cases. In addition, in the system 10, processes of identifying an emotion of the robot 40 and deciding operation thereof are executed by the server 60. However, those processes may be partially or entirely executed by the robot 40.

The robot 40 acquires various types of information detected by sensors such as information about sounds and images of a user 50 and external forces received by the robot 40, and transmits the information to the server 60. The server 60 uses a neural network (NN) to generate control information for controlling the robot 40 based on the information acquired from the robot 40.

As influence information to influence identification of an emotion, the server 60 uses information corresponding to an amount of an endocrine substance in a living body to identify an emotion from the generated input information. For example, the server 60 uses a neural network that uses, as parameters, secretion amounts of endocrine substances in a brain such as an amount of dopamine, an amount of noradrenalin, an amount of vasopressin or an amount of serotonin to identify an emotion. In the neural network, an increase in an amount of dopamine may influence generation of an emotion classified as "pleased". In addition, an increase in an amount of noradrenalin may influence generation of an emotion classified as "anger". In addition, an increase in an amount of serotonin may have an influence in a direction to suppress the intensity of an emotion such as "pleased" or "anger". A neural network determines what kind of emotion becomes easier to emerge, based on the total sum of the secretion amounts of these endocrine substances.

A process of identifying an emotion is explained specifically. The server 60 generates information to be input to the neural network based on sensor information acquired from the robot 40. In addition, the server 60 decides secretion amounts of endocrine substances based on the sensor information. For example, if the remaining battery amount is small, the amount of noradrenalin is increased. The server 60 uses the neural network in which artificial neurons are linked at coupling coefficients influenced by endocrine substances, to identify an emotion of the robot 40.

Here, if for example the continuous operation time of the robot 40 becomes long, and the robot 40 is in a situation as if it lacks rest, the server 60 controls a process related to the neural network such that it becomes easier for an emotion corresponding to the paranoid-schizoid position in psychology to emerge. For example, the server 60 increases the coupling coefficient of artificial synapses to influence artificial neurons corresponding to an emotion belonging to the paranoid-schizoid position. In addition, the server 60 expands the range occupied by an emotion corresponding to the paranoid-schizoid position on an emotion map on which a plurality of emotions are mapped. An emotion belonging to the paranoid-schizoid position refers to an emotion representing a psychological state that easily leads to a behavior of a schizoid mechanism, for example.

The server 60 transmits, to the robot 40, control information including information indicating an emotion of the robot 40 identified using the neural network and information indicating an emotion to be expanded on the emotion map. The robot 40 displays the emotion map based on the control information received from the server 60, and highlight-displays the emotion of the robot 40 identified by the server 60 on the emotion map. In addition, if an emotion belonging to the paranoid-schizoid position is identified, the server 60 may include, in the control information, an instruction to cause the robot 40 to show a behavior corresponding to the paranoid-schizoid position like a schizoid mechanism. Thereby, the robot 40 can be caused to be in human-like psychological states. In this manner, the system 10 allows appropriate handling of the fact that it becomes easier for a particular emotion to be generated depending on situations in which the robot 40 is put, in the process of identifying an emotion of the robot 40.

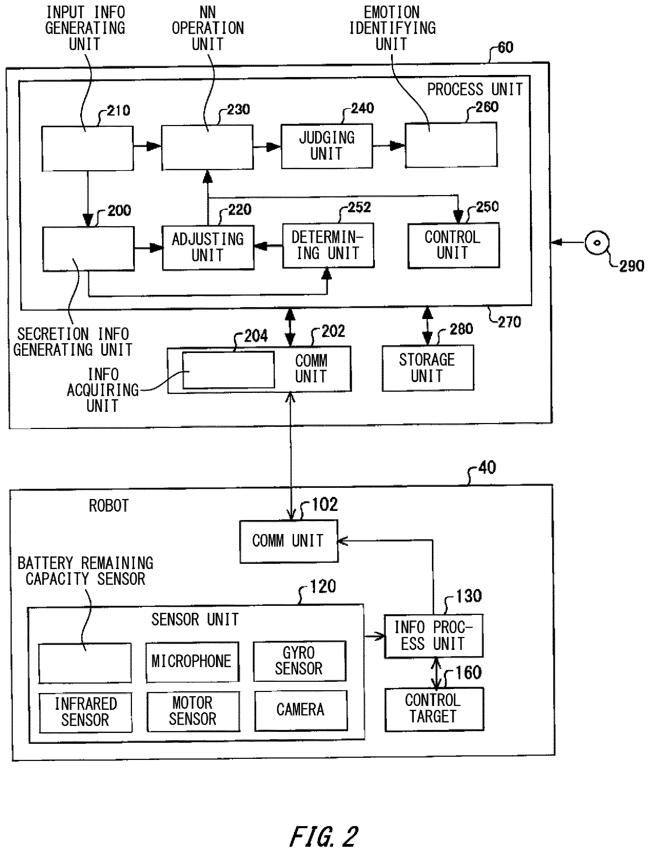

FIG. 2 schematically shows the functional block configurations of the robot 40 and the server 60. First, the functional block configuration of the robot 40 is explained. The robot 40 has a sensor unit 120, an information processing unit 130, a control target 160 and a communicating unit 102. The information processing unit 130 may be a processor such as an MPU. The communicating unit 102 is responsible for communication with the server 60. The communicating unit 102 may be a communication device such as a network IF.

The control target 160 includes a display unit mentioned below. The control target 160 includes a speaker. The control target 160 also includes motors to drive movable parts such as limbs or a head part of the robot 40, or the like.

The sensor unit 120 has various types of sensor such as a microphone, a gyro sensor, a motor sensor, a camera, a battery remaining capacity sensor or an infrared sensor. The microphone of the sensor unit 120 acquires ambient sounds. For example, the microphone of the sensor unit 120 acquires sounds of the user 50. The camera of the sensor unit 120 captures images using visible light and generates image information about moving images or still images. The infrared sensor of the sensor unit 120 detects objects around it using infrared rays. The gyro sensor of the sensor unit 120 detects the angular velocities of the entire robot 40 and each unit of the robot 40. The motor sensor of the sensor unit 120 detects the rotation angles of drive axes of motors to drive movable parts of the robot 40. The battery remaining capacity sensor of the sensor unit 120 detects the remaining capacity of a battery provided to the robot 40.

The sensor unit 120 outputs, to the information processing unit 130, various types of sensor data such as sound data acquired by the microphone, images captured by the camera, angular velocities detected by the gyro sensor, rotation angles detected by the motor sensor, a remaining capacity detected by the battery remaining capacity sensor or object information detected by the infrared sensor. The information processing unit 130 supplies the communicating unit 102 with an acquired sensor signal, and causes it to transmit the sensor signal to the server 60. In addition, based on control information acquired from the server 60, the information processing unit 130 causes the robot 40 to utter through the speaker or causes limbs of the robot 40 to operate.

Next, the functional block configuration of the server 60 is explained. The server 60 has a processing unit 270, a communicating unit 202 and a storage unit 280. The processing unit 270 includes a secretion information generating unit 200, an input information generating unit 210, an adjusting unit 220, an emotion identifying unit 260, a control unit 250 and a determining unit 252. The emotion identifying unit 260 has an NN operation unit 230 and a judging unit 240. The communicating unit 202 has an information acquiring unit 204.

The communicating unit 202 is responsible for communication with the robot 40. The communicating unit 202 may be a communication device such as a network IF. The storage unit 280 has a storage medium such as a hard disk drive or a flash memory. In addition, the storage unit 280 has a volatile storage device such as a RAM. The storage unit 280 stores data required for execution of processes by the processing unit 270 or the like, beside program codes to be read out by the processing unit 270 at the time of execution and various types of transient data.

The information acquiring unit 204 acquires information for deciding an emotion of the robot 40. For example, the information acquiring unit 202 acquires, through the network 90, information detected at the sensor unit 120 of the robot 40. The judging unit 240 judges whether or not judgement factors associated respectively with a plurality of emotions are each met, based on the information acquired by the information acquiring unit 202.

If the information acquired by the information acquiring unit 202 matches a predetermined condition about a predetermined type of emotion, the adjusting unit 220 expands the range occupied by the predetermined type of emotion on a multi-emotion map. For example, the determining unit 252 determines whether or not the information acquired by the information acquiring unit 202 matches a predetermined condition about a predetermined type of emotion. If the determining unit 252 determines that the information acquired by the information acquiring unit 202 matches a predetermined condition, the adjusting unit 220 expands the range occupied by the predetermined type of emotion on the multi-emotion map.

The emotion map is one example of a space in which emotions are mapped. In addition, the predetermined type of emotion is an emotion corresponding to the paranoid-schizoid position, for example. In addition, the predetermined condition is a predetermined condition for determining that the robot 40 is in a predetermined situation corresponding to the paranoid-schizoid position. The predetermined type of emotion may be an emotion indicating a psychological situation to make transitions between the paranoid-schizoid position and the depression position.

The emotion identifying unit 260 identifies an emotion which is among a plurality of emotions and for which the judging unit 240 judges that an associated judgement factor is met. The control unit 250 outputs information indicating the emotion identified by the emotion identifying unit 260 and the ranges occupied respectively by the plurality of emotions on the emotion map. For example, the control unit 250 causes information indicating the emotion and the ranges to be transmitted from the communicating unit 202 to the robot 40.

Based on the information acquired by the information acquiring unit 204, the adjusting unit 220 further adjusts operation parameters to influence judgement about one or more judgement factors which are among a plurality of judgement factors and associated with emotions the ranges of which are to be expanded on the emotion map, such that it becomes easier for the one or more judgement factors to be met. Thereby, if it is determined based on the information acquired by the information acquiring unit 204 that the robot 40 is in a situation corresponding to the paranoid-schizoid position, it is possible to make it easier for an emotion corresponding to the paranoid-schizoid position to be identified as an emotion of the robot 40.

The plurality of judgement factors may be a plurality of artificial neurons included in the neural network to which input information based on the information acquired by the information acquiring unit 204 is input. Any emotion among a plurality of emotions may be associated with each among the plurality of artificial neurons. The emotion identifying unit 260 may identify an emotion associated with a firing artificial neuron among the plurality of artificial neurons among the plurality of emotions. The operation parameters may be coupling coefficients of artificial synapses included in the neural network. The adjusting unit 220 increases the coupling coefficients of strong coupling artificial synapses connected to one or more artificial neurons associated with an emotion having a range which is to be expanded on the emotion map.

The secretion information generating unit 200 generates secretion information indicating the secretion amounts of one or more endocrine substances based on the information acquired by the information acquiring unit 204. Then, the adjusting unit 220 adjusts the coupling coefficients based on the secretion amounts of the endocrine substances indicated by the secretion information, and further adjusts the coupling coefficients connected to one or more judgement factors associated with the predetermined type of emotion if the range occupied by the predetermined type of emotion on the emotion map is to be expanded. Thereby, in addition to adjustment of synapse coupling according to internal secretion, adjustment can be made such that it becomes easier for a particular type of emotion to emerge depending on the situation of the robot 40.

The control unit 250 highlight-displays the range on the emotion map occupied by an emotion identified by the emotion identifying unit 260 on the emotion map. Thereby, the user 50 can easily recognize an emotion of the robot 40. In addition, if it is determined that the robot 40 is in a situation corresponding to the paranoid-schizoid position, the range occupied by the emotion corresponding to the paranoid-schizoid position on the emotion map is displayed as an expanded range. Thereby, the feeling of the robot 40 can be recognized easily.

In addition, the control unit 250 controls the robot 40 according to an emotion identified by the emotion identifying unit 260. For example, if the emotion identifying unit 260 decides an emotion "pleased" as an emotion of the robot 40, the control unit 250 generates control information for causing the robot 40 to show a behavior expressing pleasure and causes the control information to be transmitted to the robot 40. In addition, the control unit 250 may generate control information for causing the speaker of the robot 40 to output cheerfully sounding sounds and cause the robot 40 to engage in a conversation with a user using the sounds. On the other hand, if an emotion corresponding to the paranoid-schizoid position is identified as an emotion of the robot 40, the control unit 250 causes control information for causing the robot to show a behavior corresponding to the paranoid-schizoid position like a schizoid mechanism to be transmitted from the communicating unit 202 to the robot 40. Thereby, the feeling of the robot 40 can be appropriately expressed through behaviors of the robot 40 or the like.

The functions of each unit of the server 60 may be realized by a computer. For example, the processing unit 270 may be realized by a processor such as an MPU or the like, and the storage unit 280 may be realized by a recording medium such as a non-volatile memory. The storage unit 280 may store a program to be executed by a processor. By the processor executing the program, the secretion information generating unit 200, input information generating unit 210, adjusting unit 220, NN operation unit 230, judging unit 240, emotion identifying unit 260, determining unit 252 and control unit 250 may be implemented, and control of the storage unit 280 may be realized. The program may be read out of a recording medium 290 such as an optical disc by the processor and stored in the storage unit 280, or may be provided to the server 60 through a network and stored in the storage unit 280. The storage unit 280 and recording medium 290 may be computer-readable non-transitory recording media.

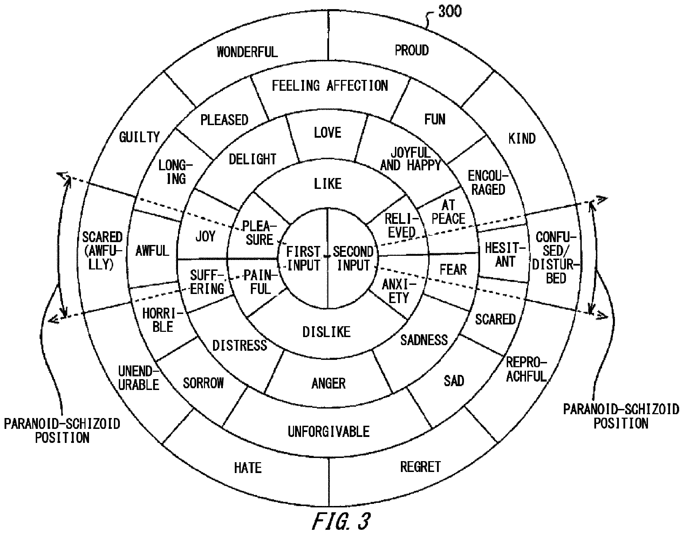

FIG. 3 schematically shows an emotion map 300 on which a plurality of emotions are mapped. On the emotion map 300, emotions are arranged in concentric circles radially from their center. The closer an emotion is arranged to the center of the concentric circles, the more primitive the emotion is. At outer parts of the concentric circles, emotions representing states or behaviors that emerge from a metal state are arranged. Emotions represent the concept covering sentiments and psychological states. On the left side of the concentric circles, emotions generated as responses generally occurring in brains are arranged. On the right side of the concentric circles, generally, emotions induced by situational determinations are arranged.

The neural network which is a target of operation of the NN operation unit 230 includes artificial neurons which are assigned to the respective emotions shown on the emotion map 300. The neural network also has a plurality of artificial neurons for input assigned to, respectively, a first input and a second input positioned at the innermost part of the concentric circles on the emotion map 300. The respective artificial neurons for input assigned to the first input and the second input receive inputs of input information generated by the input information generating unit 210 based on the information acquired by the information acquiring unit 204. Then, artificial neurons are connected by artificial synapses generally from inner parts toward outer parts to form the neural network. It may be determined by a design whether input information is input to artificial neurons for input assigned to the first input, input to artificial neurons for input assigned to the second input, or input to both the artificial neurons for input assigned to the first input and the artificial neurons for input assigned to the second input. The artificial neurons for input assigned to the first input are generally linked to artificial neurons corresponding to emotions positioned on the left side of the emotion map 300. Because of this, if input information is input to the artificial neurons for input assigned to the first input, it becomes easier for emotions positioned on the left side of the emotion map 300 to be generated. In addition, the artificial neurons for input assigned to the second input are linked to artificial neurons corresponding to emotions positioned on the right side of the emotion map 300. Then, if input information is input to the artificial neurons for input assigned to the second input, it becomes easier for emotions positioned on the right side of the emotion map 300 to be generated.

Based on the input information, the NN operation unit 230 performs operation of the neural network repeatedly, and the judging unit 240 judges the firing state of each artificial neuron. The emotion identifying unit 260 judges an emotion of the robot 40 based on the firing state of each artificial neuron. For example, the emotion identifying unit 260 judges an emotion to which a firing artificial neuron is assigned as one emotion felt by the robot 40.

On the emotion map 300, emotions generally representing comfortable feeling are arranged on the top side of the concentric circles. In addition, emotions representing generally uncomfortable feeling are arranged on the bottom side of the concentric circles. Here, the emotion map 300 includes emotions belonging to the paranoid-schizoid position. Emotions belonging to the paranoid-schizoid position are generally emotions arranged in regions extending from the center of the concentric circles along the horizontal axis of the concentric circles. On the emotion map 300, emotions belonging to the paranoid-schizoid position are "hesitant", "confused/disturbed", "awful", "scared (awfully)" and the like. The regions extending from the center of the concentric circles along the horizontal axis of the concentric circles are regions where comfortable feeling arranged on the top side above the center of the concentric circles and uncomfortable feeling on the bottom side below the center of the concentric circles are mixed. That is, the paranoid-schizoid position can be said to represent a psychological state which is chaotic and formless. Emotions at the paranoid-schizoid position shown in FIG. 3 are also emotions indicating a psychological situation where transitions between the paranoid-schizoid position and the depression position are observed.

If the robot 40 encounters a situation to fall into the paranoid-schizoid position, the server 60 performs control such that it becomes easier for an emotion corresponding to the paranoid-schizoid position to emerge. In addition, if the robot 40 encounters such a situation, the feeling of the robot 40 is presented in an easier-to-understand manner by causing the robot 40 to display the emotion map on which the ranges occupied by emotions such as "hesitant" corresponding to the paranoid-schizoid position are expanded. Specific details of these processes are mentioned below.

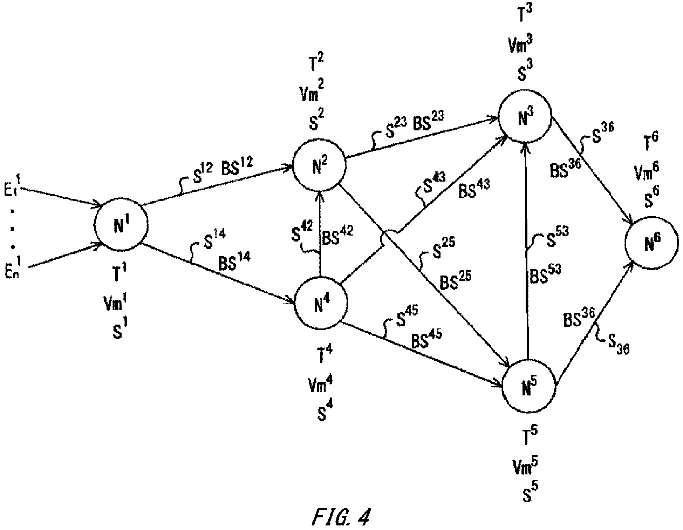

FIG. 4 schematically shows a part of the neural network used by the system 10. The illustrated part of the neural network includes artificial neurons N¹, N², N³, N⁴, N⁵ and N⁶ and artificial synapses S¹², S¹⁴, S²³, S²⁵, S³⁶, S⁴², S⁴³, S⁴⁵, S⁵³ and S⁵⁶. The artificial neurons correspond to neurons in a living body. The artificial synapses correspond to synapses in a living body.

E¹ indicates input information based on a detection signal. The artificial neuron N¹ is an artificial neuron for input. The artificial neuron N¹ receives inputs of n input information E₁¹ to input information Eₙ¹ respectively generated based on detection signals from sensors.

The artificial synapse S¹² is an artificial synapse connecting the artificial neuron N¹ and the artificial neuron N². In particular, the artificial synapse S¹² is an artificial synapse for inputting an output from the artificial neuron N¹ to the artificial neuron N². The artificial synapse S¹⁴ is an artificial synapse connecting the artificial neuron N¹ and the artificial neuron N⁴. In particular, the artificial synapse S¹⁴ is an artificial synapse for inputting an output from the artificial neuron N¹ to the artificial neuron N⁴. Assuming that j and k are integers, an artificial synapse for inputting an output from an artificial neuron N^{j} to an artificial neuron N^{k} is denoted as an artificial synapse S^{jk}.

Here, assuming that i is an integer, each artificial neuron is denoted with Nⁱ. Nⁱ has, as parameters, Sⁱ representing the status of Nⁱ, Vⁱm representing the internal state of an artificial neuron represented by Nⁱ, and Tⁱ representing a threshold of firing of Nⁱ. In addition, an artificial synapse S^{jk} has a coupling coefficient BS^{jk} as a parameter. In the present embodiment, artificial neurons are collectively referred to as an artificial neuron N in some cases, omitting their suffixes. In addition, artificial synapses are collectively referred to as an artificial synapse S in some cases, omitting their suffixes. Likewise, parameters of artificial neurons are also collectively referred to as internal information Vm, a threshold T or a status S in some cases, omitting their suffixes.

The status S, internal state Vm and threshold T of the artificial neuron N are parameters that can be updated over time. The status S is information related to the firing state of a neuron, and at least indicates whether the artificial neuron N is in a firing state or non-firing state. The internal state Vm is information related to the membrane potential of a neuron, and is one example of parameters representing the internal state or output of the artificial neuron N.

In addition, a coupling coefficient BS which is a parameter of the artificial synapse S is a parameter that can be updated over time. The coupling coefficient BS is information related to the plasticity of a synapse, and indicates the strength of coupling between artificial neurons N coupled by the artificial synapse S.

The NN operation unit 230 updates the above-mentioned parameters in the neural network according to the input information, and calculates the internal state Vm of each artificial neuron N. In the present embodiment, the artificial neuron N gets to have the status S of being in a "firing" state if the internal state Vm exceeds the threshold T. If in the firing state, a predetermined signal is output from the artificial neuron N for a predetermined length of time. After the passage of a predetermined length of time, the status S of N returns to "non-firing".

Here, contents of operation performed by the NN operation unit 230 are explained more specifically taking N² as an example. The NN operation unit 230 calculates an input I² to N² according to BS¹²×Vm¹×f(S¹)+BS⁴²×Vm⁴×f(S⁴). Here, f(S) is a function that gives 0 if S is a value representing non-firing, and gives 1 if S is a value indicating a rising phase or falling phase. f(s) corresponds to a model in which a synapse transmits an action potential only if a neuron fire. f(s) may be 1. This corresponds to a model in which a membrane potential is transmitted regardless of the firing state of a neuron. A function corresponding to another transmission model of membrane potentials may be applied as f(s).

Generally speaking, the NN operation unit 230 calculates an input Iⁱ to Nⁱ according to ∑ⱼBS^{ji}×Vm^{j}×f(S^{j})+∑ⱼEⱼⁱ. The NN operation unit 230 uses BS^{ji}, Vm^{j}, S^{j} and E^{j} at the current clock time to calculate inputs Iⁱ, Sⁱ and the like Nⁱ at the next clock time. The NN operation unit 230 repeats this temporally repetitively to decide the status S of each artificial neuron N in real-time. Then, the judging unit 240 judges the status S of each artificial neuron N, and the emotion identifying unit 260 judges an emotion of the robot 40 based on a result of judgement about the judging unit 240. For example, if an artificial neuron to which an emotion "pleased" in FIG. 3 is assigned fires, the emotion identifying unit 260 identifies "pleased" as an emotion of the robot 40.

Here, the adjusting unit 220 adjusts the coupling coefficient BS of the artificial synapse S based on the information acquired from the robot 40. For example, if it is detected that the remaining capacity of a storage battery that the robot 40 has which indicates its remaining amount is 50% or lower, the secretion information generating unit 200 increases the secretion amount of "noradrenalin" as an internal variable. Then, the adjusting unit 220 adjusts the coupling coefficient BS of the artificial synapse S associated with "noradrenalin" based on the secretion amount of "noradrenalin". As mentioned below, generation of "noradrenalin" is set to increase the coupling coefficient BS of the artificial synapse S on the path of firing of artificial emotion neurons corresponding to emotions such as "anxiety" or "anger", for example. Thereby, "noradrenalin" has an influence in the direction to make it easier for emotions such as "anxiety" or "anger" to be generated.

The secretion amounts of internal secreted substances are associated with the coupling coefficients BS of particular artificial synapses S. Thereby, according to information acquired at the robot 40, it is possible to change, through the secretion amounts of internal secreted substances, how easily signals are transmitted at artificial synapses S at respective locations in the neural network. Because of this, it becomes possible to generate variety of emotions from information acquired at the robot 40.

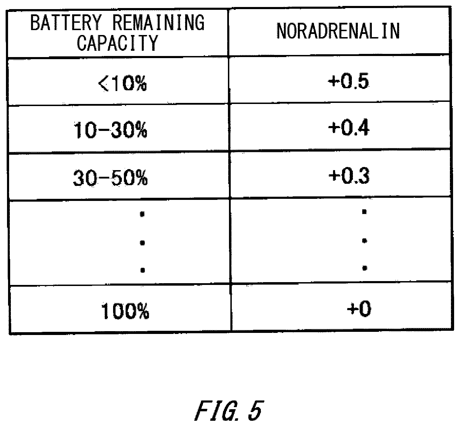

FIG. 5 is one example of correspondence information in which storage battery remaining capacities and endocrine substances are associated with each other. The storage unit 280 stores information indicating noradrenalin in association with a plurality of values about the remaining capacity of a storage battery. More specifically, the storage unit 280 stores information indicating amounts of increase in the noradrenalin secretion amount in association with respective remaining capacities of the storage battery. The amounts of increase in the secretion amount are indicated as proportions, to the upper limit value of 1, of the secretion amount represented by an internal variable used by the NN operation unit 230. Thereby, as the remaining capacity of the storage battery decreases, the noradrenalin secretion amount increases, and it becomes easier for emotions such as "anxiety" or "anger" to be generated.

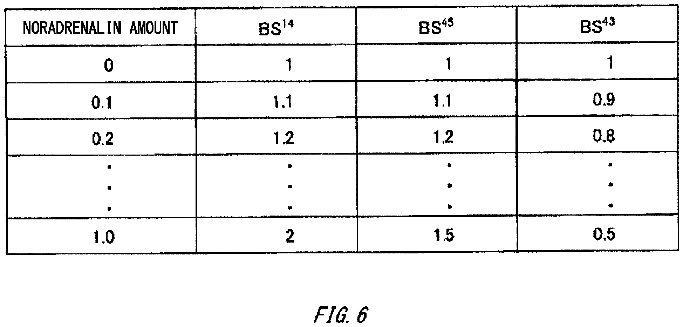

FIG. 6 is one example of coupling coefficient correspondence information in which noradrenalin secretion amounts and coupling coefficients BS are associated with each other. The storage unit 280 stores information in which an increase factor of the coupling coefficient BS¹⁴ of the artificial synapse S¹⁴, an increase factor of the coupling coefficient BS⁴⁵ of the artificial synapse S⁴⁵ and an increase factor of the coupling coefficient BS⁴³ of the artificial synapse S⁴³ are associated with each other, in association with the total secretion amount of noradrenalin. The artificial synapse S taken here as an example is assumed to be connecting artificial neurons N with strong coupling.

As illustrated in the figure, values associated with the increase factor of BS¹⁴ and the increase factor of the BS⁴⁵ increase as the amount of noradrenalin increases. On the other hand, values associated with the increase factor of BS⁴³ decrease as the amount of noradrenalin increases. Thereby, for example, in the neural network shown in FIG. 4, it becomes easier for a signal generated based on input information to be transferred in the direction from N¹ to N⁵ than in the direction from N¹ to N³. Because of this, it becomes easier for artificial neurons arranged in the direction from N¹ to N⁵ to fire. Because of this, for example on the emotion map shown in FIG. 3, as noradrenalin increases, it becomes easier for emotions arranged in a particular direction relative to a center portion of the concentric circles, for example emotions "anxiety" and "scared", to fire. Because of this, it is possible to make it easier for emotions resembling emotions of humans that they feel when they are hungry to emerge in the robot 40.

Here, in the example explained, the coupling coefficient BS of the artificial synapse S is adjusted in a direction to make it easier for an artificial neuron N at the output destination to fire. However, increase factors may be set such that the coupling coefficient BS of the artificial synapse S can be adjusted in a direction to make it harder for the artificial neuron N at the output destination to fire. For example, if an artificial synapse S is a strong coupling one, it is possible to make it harder for an artificial neuron N at the output destination to fire by making an increase factor smaller. On the other hand, if an artificial synapse S is connecting artificial neurons N with inhibitory coupling, it can be made harder for an artificial neuron N at the output destination to fire by making the increase factor larger, and it can be made easier for the artificial neuron N at the output destination to fire by making the increase factor smaller.

The adjusting unit 220 refers to the coupling coefficient correspondence information to adjust a corresponding coupling coefficient BS by an amount corresponding to the total secretion amount of each internal secreted substance. Thereby, the adjusted amount of a coupling coefficient BS can be adjusted in a complicated manner based on information acquired at the robot 40, and eventually, emotion artificial neurons can be caused to fire in a variety of combinations. Moreover, by associating the relationship between information acquired at the robot 40 and endocrine substances with the relationship between each endocrine substance and a coupling coefficient BS while giving meaning to them as if the subject is a human, natural emotions which are usually felt by humans can be generated.

With reference to FIG. 5, a correspondence between the remaining capacity of a storage battery as information to be acquired from the robot 40 and noradrenalin was shown as an example. In addition, with reference to FIG. 6, a correspondence between noradrenalin and coupling coefficients BS was shown as an example. However, correspondences of these pieces of information are shown in order to explain influences of endocrine substances in a neural network in an easy-to-understand manner. It is needless to say that correspondences other than the correspondences explained with reference to FIG. 5 and FIG. 6 may be defined.

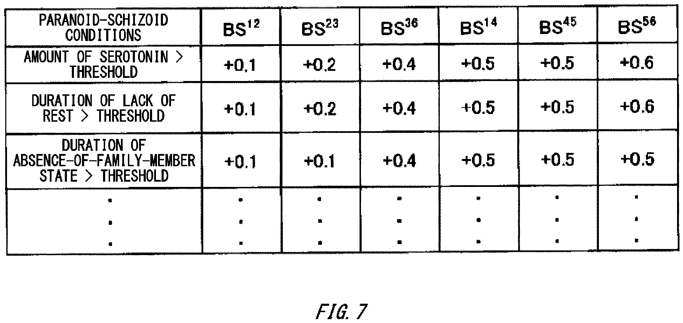

FIG. 7 shows one example of information about correspondence between coupling coefficients and conditions under which ranges of emotions corresponding to paranoid-schizoid position are expanded. The paranoid-schizoid conditions shown in FIG. 7 are conditions that should be met when the ranges occupied by emotions corresponding to the paranoid-schizoid position are to be expanded. Coupling coefficient information includes information to identify artificial synapses, and information indicating amounts of increase in coupling coefficients. It is assumed that the artificial neurons N¹, N², N³, N⁴, N⁵ and N⁶ are artificial neurons N associated with the second input, "relieved", "at peace", "anxiety", "fear" and "hesitant" on the emotion map 300, respectively. In addition, an artificial synapse S between respective artificial neurons N is assumed to be a strong coupling artificial synapse.

The storage unit 280 stores information in which identification information and an amount of increase of each of BS¹², BS²³, BS³⁶, BS¹⁴, BS⁴⁵ and BS⁵⁶ are associated, in association with the condition "amount of serotonin > threshold". The storage unit 280 stores information in which identification information and an amount of increase of each of BS¹², BS²³, BS³⁶, BS¹⁴, BS⁴⁵ and BS⁵⁶ are associated, in association with the condition "duration of lack of rest > threshold". In addition, likewise, the storage unit 280 stores information in which identification information and an amount of increase of each of BS¹², BS²³, BS³⁶, BS¹⁴, BS⁴⁵ and BS⁵⁶ are associated, in association with the condition "duration of absence-of-family-member state > threshold".

The determining unit 252 acquires the endocrine amount of serotonin from the secretion information generating unit 200, refers to the correspondence information shown in FIG. 7, and if the secretion amount of serotonin exceeds a predetermined secretion amount threshold, determines that the condition "amount of serotonin > threshold" is met. In this case, the adjusting unit 220 increases BS¹², BS²³, BS³⁶, BS¹⁴, BS⁴⁵ and BS⁵⁶ corresponding to the condition by amounts of increase corresponding to the condition. For example, the adjusting unit 220 increases BS⁵⁶ by 0.6.

The determining unit 252 measures the duration of lack of rest based on information acquired by the information acquiring unit 204. Specifically, the determining unit 252 determines whether or not the robot 40 is in operation based on information acquired by the information acquiring unit 204, and if the continuous operation time of the robot 40 exceeds a predetermined length of time, starts measuring the duration of lack of rest. Then, the determining unit 252 refers to the correspondence information shown in FIG. 7, and if the duration of lack of rest exceeds a predetermined threshold, determines that the condition "duration of lack of rest > threshold" is met. In this case, the adjusting unit 220 increases BS¹², BS²³, BS³⁶, BS¹⁴, BS⁴⁵ and BS⁵⁶ corresponding to the condition by amounts of increase corresponding to the condition. For example, the adjusting unit 220 increases BS⁵⁶ by 0.6.

In addition, the determining unit 252 measures the duration of absence-of-family-member state based on information acquired by the information acquiring unit 204. Specifically, the determining unit 252 determines whether or not people recognized based on information acquired by the information acquiring unit 204 include a person that the robot 40 learned as being a family member. Then, if a state occurs where it is determined that a person learned as being a family member is not included, the determining unit 252 starts measuring the duration of absence-of-family-member state. Then, the determining unit 252 refers to the correspondence information shown in FIG. 7, and if the duration of absence-of-family-member state exceeds a predetermined threshold, determines that the condition "duration of absence-of-family-member state > threshold" is met. In this case, the adjusting unit 220 increases BS¹², BS²³, BS³⁶, BS¹⁴, BS⁴⁵ and BS⁵⁶ corresponding to the condition by amounts of increase corresponding to the condition. For example, the adjusting unit 220 increases BS⁵⁶ by 0.5.

Thereby, coupling coefficients BS of artificial synapses S on the path from the artificial neuron N¹ to the artificial neuron N³ are increased, and it becomes easier for the artificial neuron N³ to fire if information is input to the second input. Because of this, it becomes easier to identify, as an emotion of the robot 40, an emotion "hesitant" belonging to the paranoid-schizoid position on the emotion map 300 in FIG. 3. For example, if the duration of lack of rest is not longer than the threshold, it is hard for an emotion "hesitant" to fire even if artificial neurons corresponding to "relieved" and " at peace" fire; on the other hand, if the duration of lack of rest is longer than the threshold, it becomes easier for an artificial neuron of "hesitant" to fire if artificial neurons corresponding to "relieved" and "at peace" fire. In addition, because it becomes easier for artificial neurons corresponding to "anxiety" and "fear" to fire, it becomes still easier for an artificial neuron corresponding to "hesitant" to fire.

In FIG. 7, illustration of coupling coefficients BS of artificial synapses S on paths connected to an artificial neuron corresponding to "confused/disturbed" and artificial neurons corresponding to "awful" and "scared (awfully)" respectively on the emotion map 300 in FIG. 3 is omitted. However, amounts of increase of these coupling coefficients BS can be defined in a manner similar to that for the amounts of increase of BS shown in FIG. 7. Thereby, if the robot 40 encounters a situation to be fall into the paranoid-schizoid position, it can be made easier for each artificial neuron N associated with each emotion corresponding to the paranoid-schizoid position to fire.

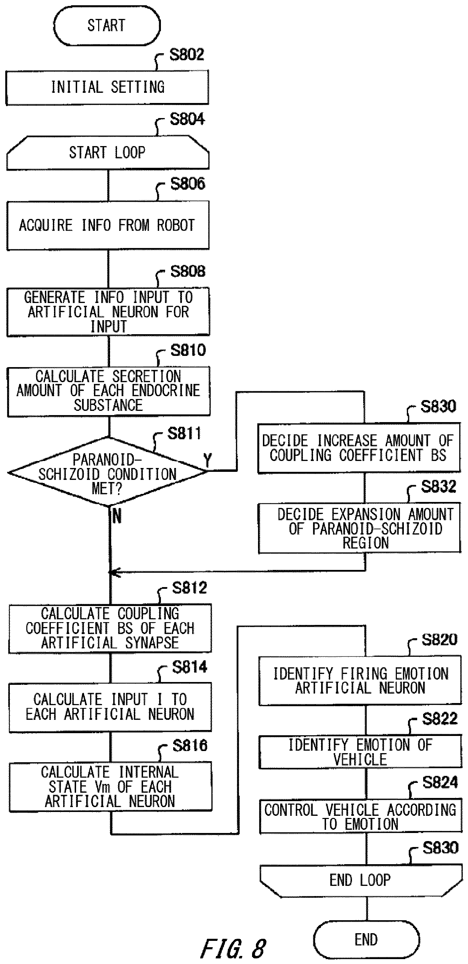

FIG. 8 is a flowchart showing operation of each unit in the emotion identifying system 100. Upon issuance of an instruction to start an emotion generating process, at Step 802, the NN operation unit 230 performs initial setting of parameters of a neural network. For example, the NN operation unit 230 reads out the initial values of the parameters from the storage unit 280, and initializes the parameters of the neural network (Step 802). Upon completion of the initial setting, at Step 804, a clock time-by-clock time process loop is started.

At Step 806, the input information generating unit 210 and secretion information generating unit 200 acquire information received by the information acquiring unit 204 from the robot 40. At Step 808, the input information generating unit 210 generates information to be input to artificial neurons for input assigned to the first input and information to be input to artificial neurons for input assigned to the second input. At Step 810, the secretion information generating unit 200 calculates secretion amounts of endocrine substances for example based on the correspondence information explained with reference to FIG. 5, FIG. 6 and the like and the information acquired at Step 806.

At Step 811, the determining unit 252 determines whether or not paranoid-schizoid conditions are met, based on the information acquired at Step 806. If it is determined that the paranoid-schizoid conditions are met (Y), the process proceeds to Step 830, and if it is determined that the paranoid-schizoid conditions are not met (N), the process proceeds to Step 812. If the paranoid-schizoid conditions are met, at Step 830, the adjusting unit 220 decides amounts of increase of the coupling coefficients BS. For example, the adjusting unit 220 decides the amounts of increase corresponding to the paranoid-schizoid conditions that are met, as explained with reference to FIG. 7 and the like.

Subsequently, at Step 832, the adjusting unit 220 decides an expansion amount of each emotion belonging to the paranoid-schizoid position. For example, the longer the duration of lack of rest is, the larger the expansion amount of the range occupied by the emotion corresponding to the paranoid-schizoid position decided by the adjusting unit 220 is. In addition, the longer the duration of absence-of-family-member state is, the expansion amount of the range occupied by the emotion corresponding to the paranoid-schizoid position decided by the adjusting unit 220 may be. The adjusting unit 220 reduces the ranges occupied by other emotions according to the expansion amount of the range occupied by the emotion corresponding to the paranoid-schizoid position. After the process at Step 832, the process proceeds to Step 812.

At Step 812, the adjusting unit 220 calculates the coupling coefficient BS of each artificial synapse S. For example, if NO in the determination at Step 811, the adjusting unit 220 decides each coupling coefficient BS based on the endocrine amount decided at Step 810. On the other hand, if YES in the determination at Step 811, the adjusting unit 220 decides each coupling coefficient BS according to the sum of the coupling coefficient BS decided based on the endocrine amount decided at Step 810 and the increase/decrease amount decided at Step 830.

Subsequently, at Step 814, the NN operation unit 230 calculates an input I to each artificial neuron N according to the formula explained with reference to FIG. 4 and the like. Subsequently, at Step 816, the NN operation unit 230 calculates the internal state Vm of each artificial neuron N based on the input I to each artificial neuron N.

Subsequently, at Step 820, the judging unit 240 judges a firing artificial neuron N based on the internal state Vm and threshold T of each artificial neuron N. At Step 822, the emotion identifying unit 260 judges an emotion of the robot 40 based on the firing artificial neuron. Thereby, the emotion identifying unit 260 assigns an emotion corresponding to the firing artificial neuron as an emotion of the robot 40. The emotion identifying unit 260 may determine that the robot 40 is more intensely feeling an emotion corresponding to an artificial neuron N whose internal state Vm is lager among firing artificial neurons. Subsequently, at Step 824, the control unit 250 control each unit of the robot 40 based on the emotion judged at Step 822.

At S830, the server 60 determines whether or not to end the loop. For example, if it is instructed to end the emotion generating process, the server 60 determines to end the loop. If the loop is not to be ended, the process returns to S804, and calculation for the still next temporal step is performed. If the loop is to be ended, this flow is ended.

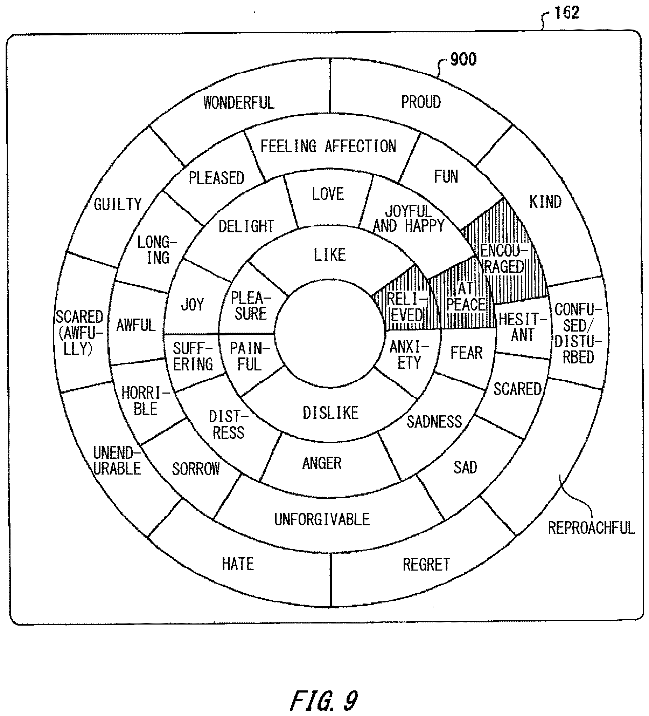

FIG. 9 shows an emotion map screen displayed on the robot 40. FIG. 9 shows an emotion map screen that is displayed when the paranoid-schizoid conditions shown in FIG. 7 are not met, and the adjusting unit 220 has not expanded the ranges occupied by emotions of the paranoid-schizoid position.

The control unit 250 of the server 60 causes the display unit 162 of the robot 40 to display an object 900 corresponding to the emotion map 300. Specifically, the control unit 250 causes information indicating the range occupied by each emotion in each concentric circle and the emotion name to be transmitted in the control information to the robot 40. In addition, the control unit 250 causes information identifying an emotion corresponding to a firing artificial neuron N to be transmitted in control information.

The information processing unit 130 of the robot 40 causes the display unit 162 to display the object 900 based on the received control information. If artificial neurons corresponding to "relieved", "at peace" and "encouraged" fire, as shown in the object 900, the information processing unit 130 highlights the ranges occupied by "relieved", "at peace" and "encouraged" more than the ranges occupied by other emotions, and makes them displayed on the display unit 162. For example, the information processing unit 130 may display, on the display unit 162, the ranges occupied by emotions "relieved", "at peace" and "encouraged" in colors different from those of the ranges occupied by the other emotions.

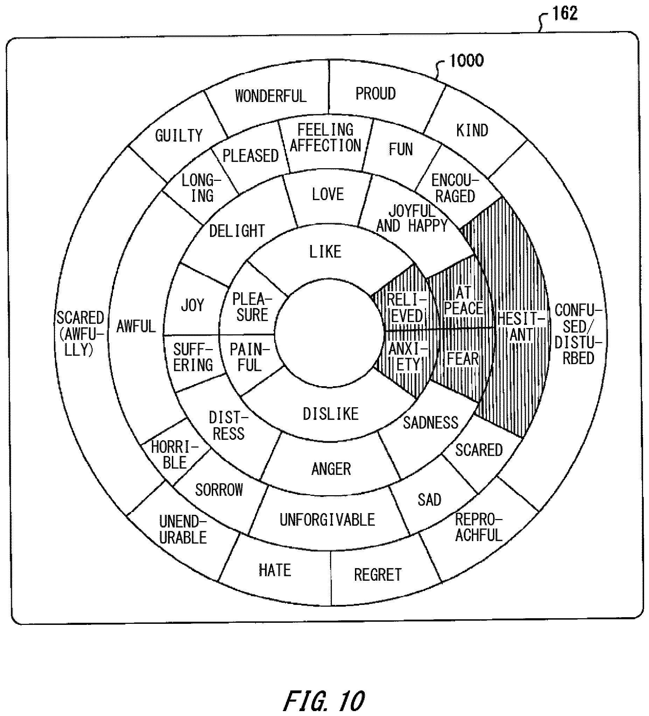

FIG. 10 shows an emotion map screen displayed on the robot 40. FIG. 10 shows an emotion map screen that is displayed when the paranoid-schizoid conditions shown in FIG. 7 are met, and the adjusting unit 220 has expanded the ranges occupied by emotions of the paranoid-schizoid position.

The control unit 250 of the server 60 decides the range occupied by each emotion in each concentric circle based on an expansion amount of the range occupied by the emotion received from the adjusting unit 220. Then, the control unit 250 causes information indicating the decided range occupied by each emotion and the emotion name to be transmitted in the control information to the robot 40. In addition, the control unit 250 causes information identifying an emotion corresponding to a firing artificial neuron N to be transmitted in control information.

The information processing unit 130 of the robot 40 causes the display unit 162 to display an object 1000 based on the received control information. Because the paranoid-schizoid conditions are met in the example shown in FIG. 10, it is made easier for artificial synapses S on the path from an input of the neural network to an artificial neuron N corresponding to an emotion "hesitant" to fire. Thereby, in addition to artificial neurons N corresponding to emotion "relieved" and "at peace", artificial neurons N corresponding to emotions "anxiety", "fear", and "hesitant" are firing.

In addition, because the paranoid-schizoid conditions are met, the ranges occupied by emotions "hesitant" and "confused/disturbed", and "awful" and "scared (awfully)" belonging to the paranoid-schizoid position are expanded. On the other hand, the ranges occupied by emotions "feeling affection", "happy", "encouraged", "scared", "sad", "unforgivable", "sorrow", "horrible", "longing" and "pleased" that are mapped on a concentric circle together with emotions "hesitant" and "awful" are displayed as shrunken regions according to expansion of "hesitant" and "awful". In addition, the ranges occupied by emotions "proud", "kind", "reproachful", "regret", "hate", "unendurable", "guilty" and "wonderful" mapped on a concentric circle together with emotions "confused/disturbed" and "scared (awfully)" are displayed as shrunken regions. Because of this, the user 50 can easily recognize a situation or feeling of the robot 40.

As has been explained above, with the system 10, the robot 40 encounters a situation to fall into the paranoid-schizoid position, it becomes easier for an emotion corresponding to the paranoid-schizoid position to emerge. In addition, because on the display unit 162 of the robot 40, the emotion map on which the ranges occupied by emotions corresponding to the paranoid-schizoid position are expanded is displayed, it is possible to present the feeling of the robot 40 in an easier-to-understand manner. In this manner, the system 10 allows appropriate handling of the state where it becomes easier for a particular type of emotion to emerge depending on situations, in a process of identifying an emotion of the robot 40.

In the system 10 according to the above-mentioned embodiment, if the paranoid-schizoid conditions are met, control is performed such that not only the ranges occupied by emotions corresponding to the paranoid-schizoid position are expanded, but also it is made easier by the adjusting unit 220 for emotions corresponding to the paranoid-schizoid position to emerge. However, even if the paranoid-schizoid conditions are met, it may be not made easier by the adjusting unit 220 for emotions corresponding to the paranoid-schizoid position to emerge.

In addition, in the system 10 according to the above-mentioned embodiment, emotions are assigned to respective artificial neurons N. However, emotions may not be assigned to artificial neurons N. In this case, if the paranoid-schizoid conditions are met, more artificial neurons N are associated to emotions of the paranoid-schizoid position by expanding the ranges occupied by the emotions corresponding to the paranoid-schizoid position. Thereby, control can also be performed such that it becomes easier for emotions corresponding to the paranoid-schizoid position to be generated.

In addition, in the system 10 according to the above-mentioned embodiment, if the paranoid-schizoid conditions are met, the ranges occupied by emotions corresponding to the paranoid-schizoid position are expanded. However, instead of expanding the ranges occupied by emotions corresponding to the paranoid-schizoid position, the emotion map 300 may be rotated about the center of the concentric circles on the emotion map 300.

The functions of the server 60 that are explained above may be implemented by one or more computers. At least some functions of the server 60 may be implemented a virtual machine. In addition, at least some of the functions of the server 60 may be implemented by cloud computing. In addition, the robot 40 is one example of a target object. Various forms other than robots may be adopted as the form of target objects. For example, target objects may be vehicles such as automobile or motorcycle or home appliances, or the like.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Symbols]

10: system; 40: robot; 50: user; 90: network; 102: communicating unit; 120: sensor unit; 130: information processing unit; 160: control target; 162: display unit; 120: sensor unit; 200: secretion information generating unit; 210: input information generating unit; 220: adjusting unit; 230: NN operation unit; 240: judging unit; 250: control unit; 252: determining unit; 260: emotion identifying unit; 270: processing unit; 280: storage unit; 290: recording medium; 300: emotion map; 900: object; 1000: object

## Claims

1. An emotion identifying system comprising:
an information acquiring unit that acquires information for deciding an emotion of a target object;
a judging unit that, based on the information, judges whether or not judgement factors associated respectively with a plurality of emotions are each met;
an adjusting unit that, if the information matches a predetermined condition about a predetermined type of emotions, expands a range occupied by the predetermined type of emotions in a space in which the plurality of emotions is mapped;
an emotion identifying unit that identifies, among the plurality of emotions, an emotion for which the judging unit judges that the associated judgement factor is met; and
an output control unit that causes information indicating an emotion identified by the emotion identifying unit and ranges occupied respectively by the plurality of emotions in the space to be output.

2. The emotion identifying system according to claim 1, wherein based on the information acquired by the information acquiring unit, the adjusting unit further adjusts an operation parameter that influences a judgement about one or more judgement factors which are associated with an emotion having a range which is to be expanded in the space such that it becomes easier for the one or more judgement factors to be met.

3. The emotion identifying system according to claim 2, wherein a plurality of the judgement factors are a plurality of artificial neurons included in a neural network to which input information based on the information acquired by the information acquiring unit is input.

4. The emotion identifying system according to claim 3, wherein
the plurality of artificial neurons are associated with any emotions among the plurality of emotions, and
the emotion identifying unit identifies, among the plurality of emotions, an emotion associated with a firing artificial neuron among the plurality of artificial neurons.

5. The emotion identifying system according to claim 3 or 4, wherein the operation parameter is a coupling coefficient of an artificial synapse included in the neural network.

6. The emotion identifying system according to claim 5, wherein the adjusting unit increases a coupling coefficient of a strong coupling artificial synapse connected to the one or more judgement factors associated with the emotion having the range which is to be expanded in the space.

7. The emotion identifying system according to claim 5 or 6, further comprising:
a secretion information generating unit that generates secretion information indicating a secretion amount of one or more endocrine substances based on the information acquired by the information acquiring unit, wherein
the adjusting unit:
adjusts the coupling coefficient based on the secretion amount of the one or more endocrine substances indicated by the secretion information; and
further adjusts a coupling coefficient connected to the one or more judgement factors associated with the predetermined type of emotions if a range occupied by the predetermined type of emotions is expanded in the space.

8. The emotion identifying system according to any one of claims 1 to 7, wherein
the predetermined type of emotions is emotions corresponding to a paranoid-schizoid position, and
the predetermined condition is a condition for determining that the target object is in a predetermined situation corresponding to the paranoid-schizoid position.

9. The emotion identifying system according to any one of claims 1 to 8, wherein the output control unit highlight-displays the range in the space occupied by an emotion identified by the emotion identifying unit in the space.

10. The emotion identifying system according to any one of claims 1 to 9, further comprising a control unit that controls the target object according to an emotion identified by the emotion identifying unit.

11. A system comprising:
the emotion identifying system according to any one of claims 1 to 10; and
the target object.

12. A program that causes a computer to function as the emotion identifying system according to any one of claims 1 to 10.
